# EUROPEAN PATENT SPECIFICATION

(11) **EP 3 115 244 B1**
(45) Date of publication and mention of the grant of the patent: **30.01.2019**
(21) Application number: 16178357.6
(22) Date of filing: 07.07.2016
(51) Int. Cl.: B60K 17/02, B60K 28/16, B60L 15/20, B60L 15/10, B60L 3/00

(54) **CONTROL APPARATUS FOR ELECTRICALLY DRIVEN VEHICLE**
STEUERUNGSVORRICHTUNG FÜR ELEKTRISCH ANGETRIEBENES FAHRZEUG
APPAREIL DE COMMANDE POUR VÉHICULE ENTRAÎNÉ ÉLECTRIQUEMENT

(30) Priority: 10.07.2015 JP 2015138614
(43) Date of publication of application: 11.01.2017
(73) Proprietor: Toyota Jidosha Kabushiki Kaisha, Toyota-shi, Aichi-ken, 471-8571 (JP)
(72) Inventor: IMAMURA, Tatsuya, TOYOTA-SHI, AICHI-KEN, 471-8571 (JP); TABATA, Atsushi, TOYOTA-SHI, AICHI-KEN, 471-8571 (JP); OKUDA, Koichi, TOYOTA-SHI, AICHI-KEN, 471-8571 (JP); MATSUBARA, Tooru, TOYOTA-SHI, AICHI-KEN, 471-8571 (JP); HIASA, Yasuhiro, TOYOTA-SHI, AICHI-KEN, 471-8571 (JP); IMAI, Keita, TOYOTA-SHI, AICHI-KEN, 471-8571 (JP); KITAHATA, Takeshi, TOYOTA-SHI, AICHI-KEN, 471-8571 (JP)
(74) Representative: Intès, Didier Gérard André

(56) References cited:
- WO-A2-2015/011540
- US-A1- 2004 065 490
- US-A1- 2010 273 606

## Description

### BACKGROUND OF THE INVENTION

### 1. Field of the Invention

The invention relates to a control apparatus for an electrically driven vehicle that can run using an electric motor as a driving power source.

### 2. Description of Related Art

For example, in the case where a three-phase synchronous electric motor is used as an electric motor, a state called a single-phase lock sometimes occurs. The single-phase lock is a state in which the value of a heat load generated in the electric motor during a predetermined period is a predetermined value or greater and in which the heat load deteriorates the performance and durability of electric circuits or electronic circuits of the electric motor and control devices for the electric motor such as an inverter. Japanese Patent Application Publication No. 2006-256560 describes an apparatus configured to avoid or inhibit such a state. The apparatus described in JP 2006-256560 A, in which engagement means is provided between a rotating shaft and a driving shaft of a rotating machine such as a motor, is configured to control the engagement means to a slip state in the case of determining that the single-phase lock or a similar state occurs. When the engagement means is controlled to the slip state, the speed of the rotating machine becomes a higher speed than a speed at which the single-phase lock occurs, and therefore, it is possible to avoid or inhibit a large electric current from flowing through only one phase, or to avoid or inhibit the rise in the temperatures of the control devices such as the inverter for controlling the rotating machine. Further, it is unnecessary to restrict the electric current for protecting the electric motor, the inverter, and therefore, it is possible to avoid or inhibit the decrease in torque.

### SUMMARY OF THE INVENTION

When the engagement means is controlled to the slip state as described in JP 2006-256560 A, it is possible to transmit torque depending on the slip state, allowing the speed of the rotating machine to be high. As described in JP 2006-256560 A, the slip state of the engagement means is set by performing the feedback control of engagement pressure (or engagement force) such that a targeted transmission torque capacity is obtained. That is, if the transmission torque capacity of the engagement means is larger than the target value, the engagement pressure is controlled so as to decrease, and on the contrary, if the transmission torque capacity of the engagement means is smaller than the target value, the engagement pressure is controlled so as to increase. Accordingly, during the control, the actual transmission torque capacity, albeit temporarily, becomes larger than the target value, resulting in an unavoidable response lag. Therefore, even when the engagement means is controlled to a predetermined slip state for avoiding the single-phase lock, the lag in the control or response produces a situation in which the slip of the engagement means is insufficient and the speed of the rotating machine is excessively lowered. That is, there is a possibility that a secure avoidance or sufficient inhibition of the single-phase lock cannot be performed.

The engagement means described in JP 2006-256560 A may be disengaged, instead of being controlled to the slip state. When the engagement means is disengaged, there is little load that is applied to the rotating machine, and therefore, the speed is not excessively lowered. However, because of the disengagement of the engagement means, the torque is not transmitted. Therefore, the torque of the driving shaft becomes zero, and there is a possibility that even the driving torque obtained when the single-phase lock occurs is not obtained.
US2010273606 (A1) discloses an automatic shifting power transmission for a vehicle including a hydrodynamic fluid drive device.
US2004065490 (A1) refers to an apparatus for controlling a driving force of an electric vehicle.

The invention provides a control apparatus for an electrically driven vehicle according to claim 1 that avoids or inhibits, without losing the driving torque, the occurrence of the so-called single-phase lock state, which is an operating state in which the value of the heat load in the electric motor during a predetermined period is a predetermined value or greater.

A control apparatus for an electrically driven vehicle according to an aspect of the disclosure is provided. The electrically driven vehicle includes a driving wheel, a driving power source and a driving power transmission path. The driving power source includes an electric motor. The driving power transmission path is configured to transmit driving power generated by the driving power source, to the driving wheel. The control apparatus includes a dynamic power transmission mechanism and an electronic control unit. The dynamic power transmission mechanism is provided on the driving power transmission path. The dynamic power transmission mechanism includes a driving-side member, a driven-side member, a fluid coupling and an engagement mechanism. The driving-side member is linked with the electric motor. The driven-side member is linked with the driving wheel. The fluid coupling is configured such that torque is transmitted through fluid while the driving-side member and the driven-side member relatively rotate. The engagement mechanism is configured to link the driving-side member and the driven-side member. The electronic control unit is configured to determine whether operating state of the electric motor becomes an operating state in which the value of a heat load generated in the electric motor during a predetermined period is a predetermined value or greater. The electronic control unit is configured to control the dynamic power transmission mechanism, in a case of determining that the operating state of the electric motor becomes the operating state in which the value of the heat load is the predetermined value or greater, so as to execute a slip control such that the speed of the electric motor is a higher speed than a speed of the electric motor at a time point, when the operating state of the electric motor becomes the operating state in which the value of the heat load is the predetermined value or greater, and such that speed of a relative rotation in the fluid coupling increases.

In the control apparatus according to the aspect, the engagement mechanism may be a clutch configured to continuously change transmission torque capacity. The electronic control unit may be configured to decrease the transmission torque capacity of the clutch as the slip control.

In the aspect, the operating state in which the value of the heat load is the predetermined value or greater may be an operating state in which a torque or electric current value of the electric motor is in a predetermined range and in which the speed of the electric motor is a previously decided speed or lower. The electronic control unit may be configured to determine that the value of the heat load becomes the predetermined value or greater, based on a torque or electric current value and a speed that are demanded of the electric motor.

In the control apparatus according to the aspect, the engagement mechanism may be a clutch configured to change transmission torque capacity. The slip control may be a control to decrease the transmission quantity of the torque of the engagement mechanism and to increase the transmission quantity of the torque of the fluid coupling. The electronic control unit may be configured to determine whether the operating state of the electric motor is likely to become the operating state in which the value of the heat load in the electric motor is the predetermined value or greater. The electronic control unit may be configured to execute the slip control in the case of determining that the operating state of the electric motor is likely to become the operating state in which the value of the heat load is the predetermined value or greater. The electronic control unit may be configured not to perform the slip control such that the transmission quantity of the torque of the engagement mechanism becomes larger than the transmission quantity of the torque by the slip control and the transmission quantity of the torque of the fluid coupling becomes smaller than the transmission quantity of the torque by the slip control, in the case of not determining that the operating state of the electric motor is likely to become the operating state in which the value of the heat load is the predetermined value or greater.

In the control apparatus according to the aspect, in the case where the operating state of the electric motor is a heat load state that causes a single-phase lock state, the slip control is executed, leading to the increase in the relative rotation speed between the driving-side member and driven-side member in the fluid coupling. As a result, when the electric motor outputs dynamic power, the speed becomes high, so that the single-phase lock state is avoided. Further, in that case, even when the relative rotation speed in the fluid coupling increases, the fluid coupling transmits dynamic power. Therefore, the dynamic power is transmitted to the driving wheel, allowing for the avoidance or inhibition of a situation in which the driving power is lost.

Further, when the transmission torque capacity of the clutch as the engagement mechanism is decreased by the slip control, a large torque is applied to the clutch. Thereby, the slip is generated in the clutch, and therewith the relative rotation is generated in the fluid coupling. Accordingly, it is possible to increase the speed of the electric motor, without a lag. Therefore, it is possible to securely avoid or inhibit the operating state of the electric motor from becoming the above-described single-phase lock state.

Furthermore, the electronic control unit determines whether the operating state of the electric motor is a heat load state that is likely to become the single-phase lock state or a heat load state that is not likely to become the single-phase lock state, and based on the determination result, decreases or increases the transmission torque capacity of the clutch as the engagement mechanism. Therefore, in the case where the torque is applied in a direction in which the speed of the electric motor is lowered, the slip is generated in the clutch so that the relative rotation in the fluid coupling increases, and thereby, the decrease in the speed of the electric motor is inhibited. Therefore, it is possible to securely avoid or inhibit the single-phase lock state. Further, on the contrary, in the case where the single-phase lock state, which for example lowers the speed of the electric motor, is unlikely to occur, a large quantity of torque is transmitted through the engagement mechanism, allowing for the reduction in the dynamic power that is consumed by the relative rotation in the fluid coupling, and the improvement in energy efficiency.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view showing an exemplary electrically driven vehicle that is a control object of a control apparatus according to the invention;
FIG. 2 is a flowchart for describing an exemplary control that is executed by the control apparatus according to the invention;
FIG. 3 is a linear diagram schematically showing a single-phase lock region;
FIG. 4 is a skeleton diagram showing an exemplary hybrid vehicle that is an electrically driven vehicle as a control object of the control apparatus according to the invention;
FIG. 5 is a block diagram for describing a control system of the hybrid vehicle;
FIG. 6 is a table collectively showing engagement/disengagement states of a first clutch, a second clutch and a brake in each running mode of the hybrid vehicle, and a function of each motor generator;
FIG. 7 is a collinear diagram showing an operating state in a hybrid mode;
FIG. 8 is a collinear diagram showing an operating state in a series mode;
FIG. 9 is a collinear diagram showing an operating state in a single drive mode;
FIG. 10 is a collinear diagram showing an operating state in a double drive mode;
FIG. 11 is a timing chart showing changes in the speed of a second motor generator, the hydraulic pressure of a lock-up clutch in the case where the control apparatus according to the invention performs a control at the time of movement start in the hybrid mode; and
FIG. 12 is a skeleton diagram showing an exemplary hybrid vehicle in which the positions of a fluid coupling and a lock-up clutch shown in FIG. 4 are changed.

### DETAILED DESCRIPTION OF EMBODIMENTS

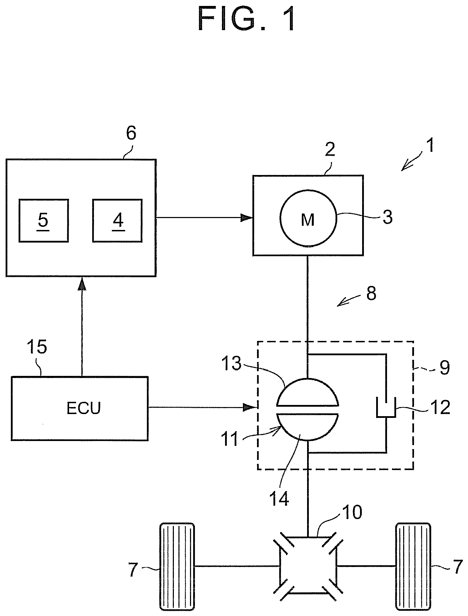

FIG. 1 schematically shows an exemplary electrically driven vehicle 1 that is controlled by a control apparatus in the invention, and a driving power source 2 includes an electric motor (M) 3. The electric motor 3 is a three-phase synchronous electric motor, as an example, and is configured to output dynamic power by the electric power feeding from an electric power source unit 6 that includes an electric storage apparatus 4 and an inverter 5. Here, the driving power source can include an internal combustion engine (not illustrated), in addition to the electric motor 3. Therefore, the electrically driven vehicle 1 may be a so-called hybrid vehicle.

A dynamic power transmission mechanism 9 and a differential gear 10 to transmit torque while allowing for the differential rotation of right and left driving wheels 7 are provided on a transmission path 8 along which the dynamic power output by the electric motor 3 is transmitted to the driving wheels 7. The dynamic power transmission mechanism 9 includes a fluid coupling 11 and an engagement mechanism 12. The fluid coupling 11 includes a driving-side member 13 linked with the electric motor 3, and a driven-side member 14 disposed so as to face the driving-side member 13 and linked with the driving wheels 7 through the differential gear 10. The driving-side member 13 and the driven-side member 14, together with fluid, are contained within a casing (not illustrated) that is sealed in a fluid-tight manner. Then, the fluid flows by the relative rotation between the driving-side member 13 and the driven-side member 14, and the fluid is fed from the driving-side member 13 to the driven-side member 14 so that torque is transmitted between the driving-side member 13 and the driven-side member 14. In short, the fluid coupling 11 is a coupling that allows for the relative rotation between the driving-side member 13 and the driven-side member 14 and that transmits torque while the driving-side member 13 and the driven-side member 14 relatively rotate. As the fluid coupling, a torque converter having a torque amplification function can be also employed.

The engagement mechanism 12 is a mechanism that links the driving-side member 13 and the driven-side member 14, and is configured by a clutch (friction clutch) that can continuously change transmission torque capacity, in the example shown in FIG. 1. The friction clutch transmits torque by the friction force generated by the contact between a disc and a plate (which are not illustrated), and changes the transmission torque capacity depending on the contact pressure. The contact pressure, as an example, can be generated and controlled by hydraulic pressure. The clutch may be incorporated in the fluid coupling 11, or may be provided in parallel with the fluid coupling 11, separately from the fluid coupling 11.

There is provided an electronic control apparatus (ECU) 15 that controls the electric motor 3 through the electric power source unit 6 and that controls the dynamic power transmission mechanism 9. The ECU 15 is configured mainly by a microcomputer, and is configured to perform computations using input data and previously stored data and to output the computation results, as control command signals, to the electric power source unit 6 and a hydraulic pressure control unit (not illustrated) of the dynamic power transmission mechanism 9. Examples of the input data include vehicle speed, accelerator position (demand driving quantity), the speed of the electric motor 3, the state-of-charge (SOC) of the electric storage apparatus 4, and a signal for an off-road switch by which a crawl control for off-road running is turned on. Examples of the output control command signals include a torque command signal (electric current command signal) for the electric motor 3, a command signal for the engagement/disengagement of the engagement mechanism 12, and a command signal for the transmission torque capacity.

When the electric motor 3 is a three-phase synchronous electric motor, there is a possibility that the electric motor 3 becomes an operating state called a single-phase lock state in the case of a low speed and a high torque. Here, the single-phase lock or the single-phase lock state is a state in which the value of the heat load generated in the electric motor during a predetermined period is a predetermined value or greater and decreases the performance or durability of electric circuits or electronic circuits of the electric motor, the inverter. In the specification, the "single-phase lock" or the "single-phase lock state" is used in the above sense. In this state, the heat generation of not only the electric motor 3 but also the inverter 5 increases, causing the decrease in the durability of them. Further, the electric motor 3 cannot output a torque corresponding to an electric current, resulting in the insufficiency of the driving power for the electrically driven vehicle 1. For securely avoiding such a single-phase lock state and ensuring the driving torque, the control apparatus according to the invention is configured to execute a control described below.

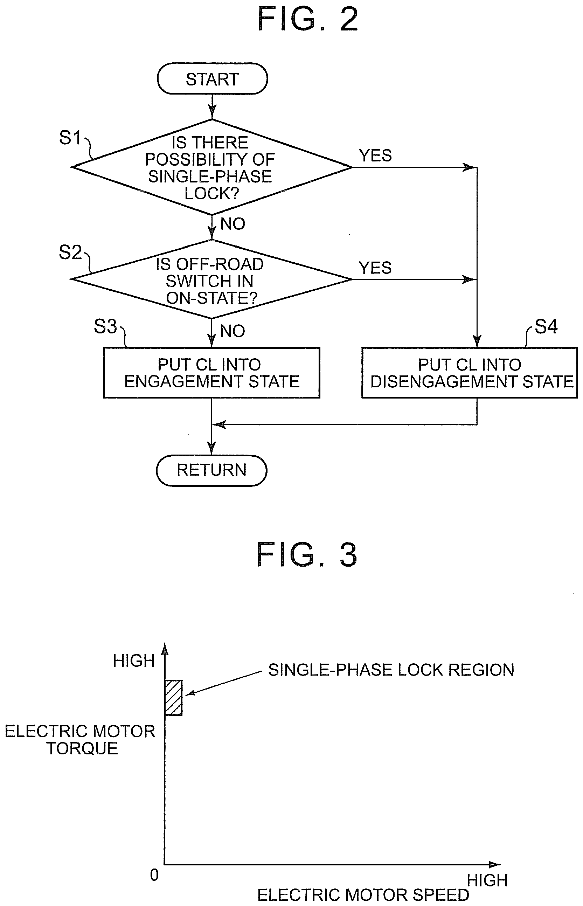

FIG. 2 is a flowchart for describing an example of the control. The routine is executed in the case where the electrically driven vehicle 1 is running or in the case where the electric power source unit 6 is in an on-state. After the start of the routine, first, the possibility of the single-phase lock is determined (step S1). As described above, the single-phase lock state is a state in which the value of the heat load in the electric motor 3 during a predetermined period is a predetermined value or greater. Therefore, the determination in step S1 may be performed depending on whether the value of the detected heat load in the electric motor 3 or the value of the heat load that is evaluated by a computation such as the time integration of the electric current to flow through a coil in a predetermined phase is the predetermined value or greater, or may be performed based on a map (see FIG. 3) that specifies a "single-phase lock region" with the torque (or electric current value) and speed of the electric motor 3. Here, the "predetermined value" may be the maximum value in a range in which the electric motor 3 and circuits are not damaged or in a range in which the durability does not decrease, and alternatively, may be a smaller value than the maximum value in consideration of a lag in control responsivity, a safety factor. Meanwhile, the speed and torque (or electric current value) of the electric motor 3 can be detected by predetermined sensors, or can be estimated based on the change in vehicle speed, the accelerator position (demand driving quantity). Therefore, based on the previously prepared data shown in FIG. 3 and the data obtained by the sensors, it is possible to determine the possibility of the occurrence of the single-phase lock, that is, whether the continuation of the operating state at that time point leads to the single-phase lock state or does not lead to the single-phase lock state. As an example, thresholds may be previously set for the speed and torque of the electric motor 3 respectively, and when the detected speed is the threshold or lower and the torque is the threshold or higher, it may be determined to become the single-phase lock state.

In the case where the demand torque for the electric motor 3 is low because of a low accelerator position or the like, or in the case where the speed of the electric motor 3 is high, there is no possibility that the operating state of the electric motor 3 becomes the single-phase lock state, and therefore, the negative determination is made in step S1. In that case, whether the off-road switch is in an on-state is determined (step S2). The determination step is a step for determining whether the electrically driven vehicle 1 runs while the electric motor 3 operates at a low speed and at a high torque. Therefore, the determination may be performed not based on the signal output by the off-road switch but based on the road information obtained by a navigation system, a history of the vehicle speed and the accelerator position or the vehicle acceleration. Accordingly, the determination in step S2 may be executed as one mode of the above-described determination in step S1. Here, ordinarily, the off-road switch is turned "on" in the case of the running at a low vehicle speed and at a high torque such as the running on a climbing road with a high gradient. Therefore, when the off-road switch is "on", it is determined that the operating state of the electric motor 3 is likely to become the single-phase lock state. Then, in step S2, it is regarded that the single-phase lock state occurs 100%, and the positive determination is made.

In the case where the negative determination is made in step S2, the electric motor 3 does not become the single-phase lock state, or the possibility is low. Therefore, in that case, the engagement mechanism (CL) 12 is engaged (step S3), and the process returns. The engagement control is a control to increase the transmission torque capacity of the engagement mechanism 12. Therefore, in the case where the engagement mechanism 12 is slipping and the relative rotation between the driving-side member 13 and the driven-side member 14 is being generated, the engagement control is a control to decrease the relative rotation speed (differential rotation speed) or to reduce the relative rotation speed to zero, and in the case where the engagement mechanism 12 is transmitting torque together with the fluid coupling 11, the engagement control is a control to decrease the transmission ratio of the torque of the fluid coupling 11 and increase the transmission ratio of the torque of the engagement mechanism 12. When the engagement mechanism 12 is controlled to a so-called complete engagement state with no slip, the dynamic power loss due to the slip is reduced, and therefore, it is possible to improve the energy efficiency.

On the other hand, in the case where the positive determination is made in step S1, or in the case where the positive determination is made in step S2, the engagement mechanism (CL) 12 is controlled to the disengagement side (step S4), and the process returns. The disengagement control is a control to decrease the transmission torque capacity of the engagement mechanism 12, and corresponds to the slip control in the embodiment of the invention. Therefore, in the case where the driving-side member 13 and the driven-side member 14 in the fluid coupling 11 are rotating in a united manner and the relative rotation is being not generated, the disengagement control is a control to generate the relative rotation. In the case where the relative rotation is being generated, the disengagement control is a control to increase the relative rotation speed (differential rotation speed). Further, in the case where the engagement mechanism 12 is transmitting torque together with the fluid coupling 11, the disengagement control is a control to increase the transmission ratio of the torque of the fluid coupling 11 and decrease the transmission ratio of the torque of the engagement mechanism 12.

Therefore, in the case where the demand driving quantity is increased and the output of the electric motor 3 is increased, the fluid coupling 11 becomes the so-called slip state or the slip quantity increases, and the relative rotation speed (differential rotation speed) increases, in response to the increase in the output torque of the electric motor 3. That is, without the lag behind the increase in the output torque of the electric motor 3, the slip state occurs or the slip quantity increases, so that the speed of the electric motor 3 increases. In other words, it is possible to set the speed of the electric motor 3 to a speed outside of the single-phase lock region, without particularly performing the speed control and torque control for the electric motor 3. Thus, by the increase in the speed of the electric motor 3, the operating state of the electric motor 3 is avoided or inhibited from falling within the single-phase lock region. Further, in the fluid coupling 11, the driving-side member 13 and the driven-side member 14 relatively rotate, and thereby, torque is transmitted through the fluid. Therefore, since torque is transmitted by the fluid coupling 11, torque is transmitted from the electric motor 3 to the driving wheels 7 and the driving power of the electrically driven vehicle 1 can be ensured, even when the transmission torque capacity of the engagement mechanism 12 is decreased. Furthermore, by the relative rotation between the driving-side member 13 and the driven-side member 14, the fluid is stirred and sheared, and therefore, heat is generated. However, the fluid flows in a circulating manner, within the fluid coupling 11. Therefore, the heat radiation from the fluid to the exterior is promoted, allowing for the inhibition of temperature rise.

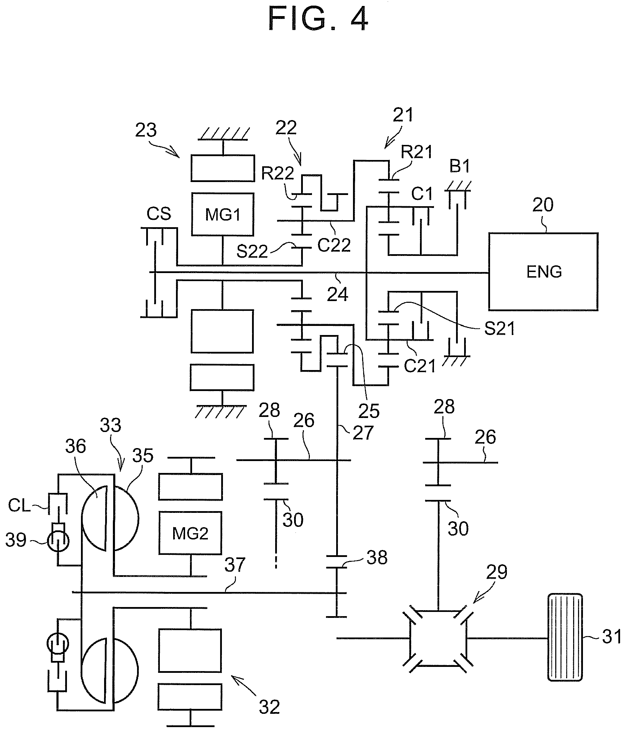

Next, an example in which the electrically driven vehicle 1 is a hybrid vehicle and the invention is applied to a control apparatus for the hybrid vehicle will be described. FIG. 4 shows an exemplary gear train of the hybrid vehicle. On an identical axis line to an engine (ENG) 20, an overdrive mechanism 21, a dynamic power division mechanism 22 and a first motor generator (MG1) 23 are disposed in order from the engine 20 side. The engine 20 is an internal combustion engine such as a gasoline engine and a diesel engine. The overdrive mechanism 21 is a mechanism for increasing the output speed such that the output speed is higher than the engine speed, and in the example shown in FIG. 4, is configured by a single pinion type planetary gear mechanism. Therefore, the overdrive mechanism 21 includes a sun gear S21, a ring gear R21 disposed on a concentric circle for the sun gear S21, and a carrier C21 holding, in a rotatable and revolvable manner, a pinion gear engaged with the sun gear S21 and the ring gear R21. The carrier C21 is linked with an input shaft 24 to which dynamic power is transmitted from the engine 20. Further, there are provided a first clutch C1 to selectively link the sun gear S21 and the carrier C21, and a brake B1 to selectively fix the sun gear S21. Therefore, by the engagement of the clutch C1, the overdrive mechanism 21 becomes a so-called direct connection stage in which the whole of the overdrive mechanism 21 rotates in a united manner, and the change gear ratio of the overdrive mechanism 21 becomes "1". In contrast, when the rotation of the sun gear S21 is stopped by the engagement of the brake B1, the speed of the ring gear R21 becomes higher than the speed of the carrier C21, and the overdrive mechanism 21 becomes a so-called overdrive stage in which the change gear ratio is lower than "1". Further, when both the first clutch C1 and the brake B1 are engaged, the whole of the overdrive mechanism 21 is fixed, and the rotation of the engine 20 is also stopped. Furthermore, when both the first clutch C1 and the brake B1 are disengaged, the sun gear S21 becomes a free rotation state, and therefore, the overdrive mechanism 21 does not perform torque transmission.

The ring gear R21 is an output element, and transmits dynamic power to the dynamic power division mechanism 22. In the example shown in FIG. 4, the dynamic power division mechanism 22 is configured by a single pinion type planetary gear mechanism. Therefore, the dynamic power division mechanism 22 includes a sun gear S22, a ring gear R22 disposed on a concentric circle for the sun gear S22, and a carrier C22 holding, in a rotatable and revolvable manner, a pinion gear engaged with the sun gear S22 and the ring gear R22. The carrier C22 is linked with a ring gear R21 of the overdrive mechanism 21. The output element of the dynamic power division mechanism 22 is the ring gear R22, and the ring gear R22 is linked with an output gear 25. The sun gear S22 is linked with the first motor generator 23, and the sun gear S22 is a reaction element.

The sun gear S22 is united with a sun gear shaft, and the input shaft 24 rotatably passes through the interior of the sun gear shaft. Then, there is provided a second clutch CS to selectively link the input shaft 24 and the sun gear S22. The second clutch CS is a clutch for setting a series mode, as described later.

A countershaft 26 is disposed parallel to the input shaft 24, and on the countershaft 26, a driven gear 27 having a large diameter and a drive gear 28 having a small diameter are provided so as to rotate in a united manner. The driven gear 27 is engaged with the above-described output gear 25. Further, the drive gear 28 is engaged with a ring gear 30 of a differential gear 29 that is a final drive gear. The driving power is transmitted from the differential gear 29 to right and left driving wheels 31. Therefore, a series of gears of the driven gear 27 and the drive gear 28 constitutes a speed reduction mechanism. Here, in FIG. 4, for the convenience of illustration, the drive gear 28 and the differential gear 29 are displaced and described on the right side of FIG. 4.

A second motor generator 32, which corresponds to the electric motor in the embodiment of the invention, is disposed parallel to the input shaft 24 and the countershaft 26. Furthermore, on an identical axis line to the second motor generator 32, a fluid coupling 33, and a lock-up clutch CL, which corresponds to the engagement mechanism in the embodiment of the invention, are disposed in parallel. The fluid coupling 33 is configured to dispose a pump impeller 35, which is a driving-side member, and a turbine runner 36, which is a driven-side member, such that they face each other, and to transmit torque between the pump impeller 35 and the turbine runner 36 by feeding, to the turbine runner 36, the spiral flow of fluid generated by the pump impeller 35. Then, the pump impeller 35 is linked with the second motor generator 32. Further, a turbine shaft 37 united with the turbine runner 36 passes through a central part of the second motor generator 32, and extends to the driven gear 27 side. Then, another drive gear 38 engaged with the driven gear 27 is attached to the turbine shaft 37.

The lock-up clutch CL is a clutch that transmits torque by mechanically linking the pump impeller 35 or a member united with the pump impeller 35 and the turbine runner 36 or a member united with the turbine runner 36, and is configured by a clutch such as a friction clutch that is controlled by hydraulic pressure, electromagnetic force or the like such that the transmission torque capacity changes continuously. Here, a damper 39 is provided in series with the lock-up clutch CL. Further, the fluid coupling 33 and the lock-up clutch CL may be a conventionally known torque converter with a lock-up clutch. Further, the fluid coupling 33 and the lock-up clutch CL correspond to the dynamic power transmission mechanism in the embodiment of the invention.

By the above-described dynamic power division mechanism 22, the dynamic power output by the engine 20 is divided to the first motor generator 23 side and the output gear 25 side. In that case, the first motor generator 23 functions as an electric generator, and thereby, gives reaction torque to the sun gear S22. The electric power generated by the first motor generator 23 is fed to the second motor generator 32. The second motor generator 32 functions as a motor, and the output torque is added to the torque output from the output gear 25, at the driven gear 27. Therefore, the motor generators 23, 32 are electrically connected through an inverter and an electric storage apparatus, which are not illustrated. Here, the motor generators 23, 32, as an example, are configured by three-phase synchronous electric motors.

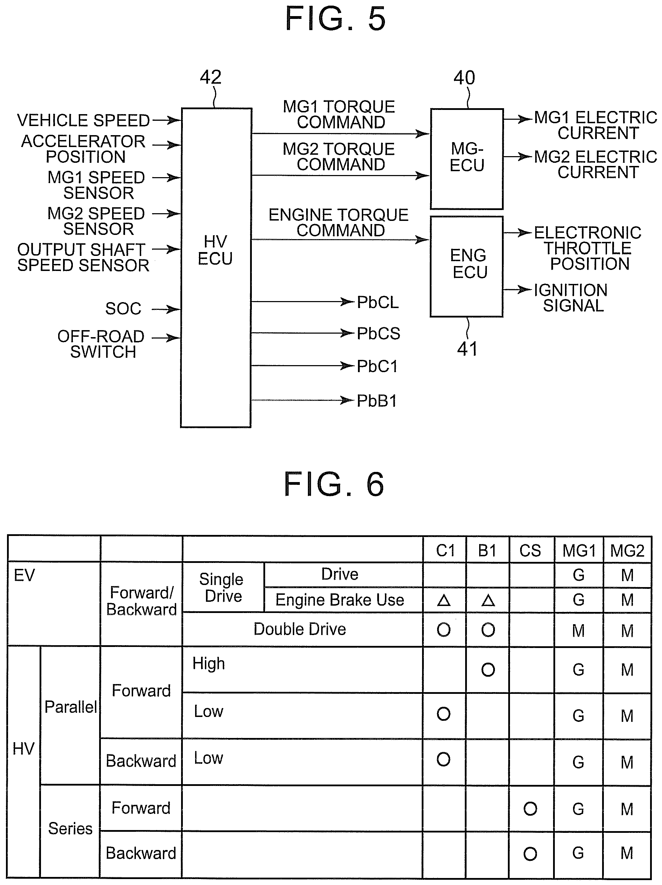

FIG. 5 is a block diagram showing a control system for the hybrid vehicle. There are provided a motor-generator electronic control apparatus (MG-ECU) 40 to control the motor generators 23, 32, and an engine electronic control apparatus (ENG-ECU) 41 to control the engine 20. The electronic control apparatuses 40, 41 are configured mainly by microcomputers, and are configured to perform computations based on a variety of input signals or a variety of input data and to output the computation results as control command signals. The MG-ECU 40, mainly, is configured to control the respective electric currents (MG1 electric current, MG2 electric current) in the first motor generator 23 and the second motor generator 32. Further, the ENG-ECU 41, mainly, is configured to output, to the engine 20, an electronic throttle position signal for commanding the position of an electronic throttle valve (not illustrated) of the engine 20, and an ignition signal for commanding the ignition and the timing of the ignition.

There is provided a hybrid electronic control apparatus (HV-ECU) 42 that outputs command signals to the electronic control apparatuses 40, 41, and therewith, performs the control of the engagement/disengagement of the above-described clutches C1, CS, CL and brake B1, and the control of the transmission torque capacity. Similarly to the above-described electronic control apparatuses 40, 41, the HV-ECU 42 is configured mainly by a microcomputer, and is configured to perform computations based on a variety of input signals or a variety of input data and to output the computation results as control command signals. Examples of the data to be input include vehicle speed, accelerator position, the detection data by a speed sensor for the first motor generator (MG1), the detection data by a speed sensor for the second motor generator (MG2), the detection data by a speed sensor for an output shaft (for example, the countershaft), state-of-charge (SOC), and a signal from an off-road switch. Further, as command signals to be output, for example, a torque command for the first motor generator (MG1) and a torque command for the second motor generator (MG2) are output to the MG-ECU 40, and an engine torque command is output to the ENG-ECU 41. Furthermore, control hydraulic pressures PbC1, PbCS, PbCL, PbB1 for the clutches C1, CS, CL and the brake B1 are output from the HV-ECU 42.

Various running modes are set by making the motor generators 23, 32 function as motors or electric generators and controlling the clutches C1, CS and the brake B1 to engagement or disengagement states. FIG. 6 collectively shows the running modes. With respect to the clutches C1, CS and the brake B1, a circle mark shows the engagement state, and a triangle mark shows that either one is in the engagement state. Further, with respect to the motor generators MG1, MG2, "G" shows that the motor generator functions mainly as an electric generator, and "M" shows that the motor generator functions mainly as a motor at the time of driving and functions as an electric generator at the time of regeneration. A hybrid mode (HV) is a mode of running while generating driving power with the engine 20 and the motor generators 23, 32, and a parallel mode and a series mode can be selected. As the forward movement in the parallel mode, a running in which the above-described overdrive mechanism 21 is set to the overdrive stage (high), and a running in which the overdrive mechanism 21 is set to the direct connection stage (low) are possible. The overdrive stage is set by engaging only the brake B1. In that case, the first motor generator 23 functions as an electric generator (G), and the speed of the engine 20 is controlled to a speed allowing for a good fuel efficiency. The electric power generated by the first motor generator 23 is fed to the second motor generator 32, and the second motor generator 32 functions as a motor (M). In contrast, the direct connection stage is set by engaging only the first clutch C1. In that case, the functions of the motor generators 23, 32 are the same as those in the case of the running in the overdrive stage.

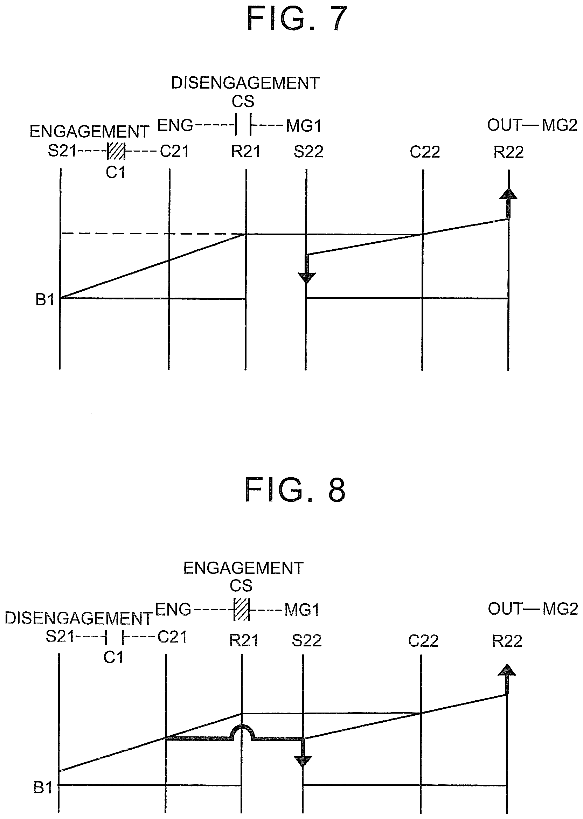

FIG. 7 is a collinear diagram for the planetary gear mechanism configuring the overdrive mechanism 21 and the planetary gear mechanism configuring the dynamic power division mechanism 22 when the vehicle runs in the hybrid mode. The left side of FIG. 7 is a collinear diagram for the overdrive mechanism 21, and the right side is a collinear diagram for the dynamic power division mechanism 22. At the time of forward movement, the sun gear S21 is fixed by the brake B1, and the carrier C21 is rotated by the engine 20. Therefore, the ring gear R21 rotates at a speed that is higher than the engine speed. That is, the overdrive mechanism 21 becomes the overdrive stage in which the change gear ratio is lower than "1". In the dynamic power division mechanism 22, the carrier C22 rotates with the ring gear R21 of the overdrive mechanism 21, and the torque is the torque in the positive direction (the rotation direction of the engine 20). In that state, the first motor generator 23 functions as an electric generator, the torque in the negative direction (the direction of stopping the rotation) acts on the sun gear S22, and the torque in the positive direction associated with that acts on the ring gear R22. That is, the dynamic power of the engine 20 is divided to the sun gear S22 side and the ring gear R22 side. Then, the electric power generated by the first motor generator 23 is fed to the second motor generator 32, and the second motor generator 32 functions as a motor. Therefore, the torque is added to the torque to be output from the ring gear R22, and is output toward the driving wheels 31. The broken line in FIG. 7 shows the operating state when the direct connection stage is set in the overdrive mechanism 21. Here, in the backward running, by the dynamic power output by the engine 20, the first motor generator 23 rotates to generate electricity, and by the electric power, the second motor generator 32 functions as a motor in the negative rotation direction.

The series mode is a mode of running while driving the first motor generator 23 as an electric generator by the engine 20 and driving the second motor generator 32 as a motor by the electric power. Therefore, by engaging only the second clutch CS, the dynamic power of the engine 20 is transmitted to the first motor generator 23, and the first motor generator 23 functions as an electric generator (G). Further, by the feed of the electric power generated by the first motor generator 23, the second motor generator 32 functions as a motor (M), and rotates positively for the forward running or rotates negatively for the backward running.

FIG. 8 is a collinear diagram for the planetary gear mechanism configuring the overdrive mechanism 21 and the planetary gear mechanism configuring the dynamic power division mechanism 22 when the vehicle runs in the series mode. The left side of FIG. 8 is a collinear diagram for the overdrive mechanism 21, and the right side is a collinear diagram for the dynamic power division mechanism 22. At the time of forward movement, the dynamic power of the engine 20 is transmitted to the first motor generator 23 through the second clutch CS, and the first motor generator 23 rotates in the positive direction, to generate electricity. Further, the sun gear S22 of the dynamic power division mechanism 22 rotates positively, but the sun gear S21 idles in the overdrive mechanism 21 in which the ring gear R21 is linked with the carrier C22. Therefore, reaction force is not generated in the carrier C22 of the dynamic power division mechanism 22, and as a result, the dynamic power of the engine 20 is not transmitted to the ring gear R22. Meanwhile, by the electric power generated by the first motor generator 23, the second motor generator 32 rotates in the positive direction, to output torque, and therefore, the vehicle runs forward. In that case, the ring gear R22 of the dynamic power division mechanism 22 rotates in the positive direction. Here, at the time of backward movement, the second motor generator 32 rotates in the negative direction.

Next, an EV mode will be described. The EV mode is a mode of running by the electric power of the electric storage apparatus without using the dynamic power of the engine 20, and therefore, the vehicle runs as an electric vehicle (EV: Electric Car). The second motor generator 32 is linked with the turbine shaft 37 through the fluid coupling 33 or the lock-up clutch CL. Therefore, in the EV mode, as the driving power source, mainly, the second motor generator 32 operates, and when the driving power or the braking power is insufficient, the first motor generator 23 is used concurrently. That is, a single drive mode of using only the second motor generator 32 and a double drive mode of using both the motor generators 23, 32 are possible. In the single drive mode, since only the second motor generator 32 operates as the driving power source, the clutches C1, CS and the brake B1 are disengaged, and the first motor generator 23, which is not particularly controlled, performs neither powering nor regeneration. Then, the second motor generator 32 functions as a motor (M) at the time of driving, and functions as an electric generator (G) at the time of braking. When the braking power associated with regeneration is insufficient, at least either one of the first clutch C1 and the brake B1 is engaged. Further, the motor generators 23, 32 function as electric generators (G), and the negative torque associated with the electricity generation acts as braking power.

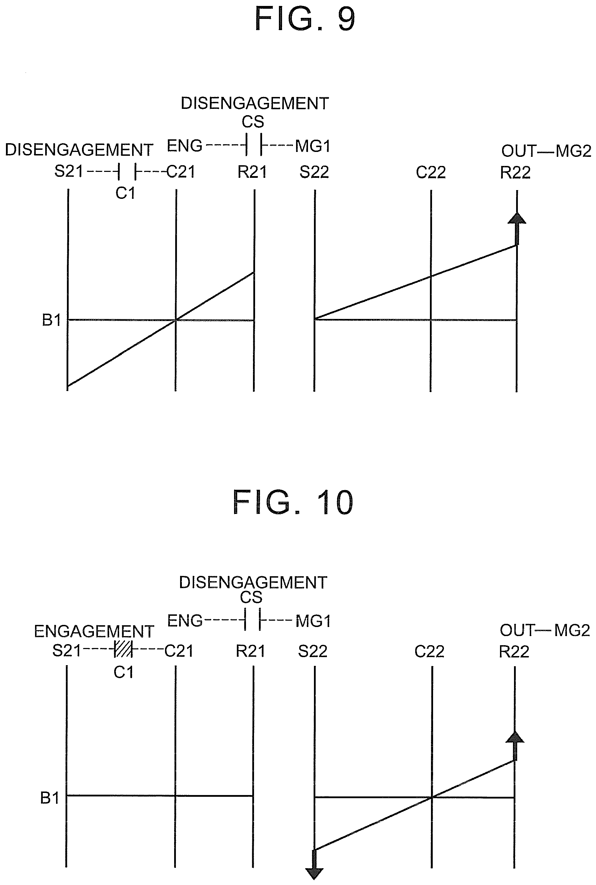

FIG. 9 is a collinear diagram for the planetary gear mechanism configuring the overdrive mechanism 21 and the planetary gear mechanism configuring the dynamic power division mechanism 22 when the vehicle runs in the single drive mode. The left side of FIG. 9 is a collinear diagram for the overdrive mechanism 21, and the right side is a collinear diagram for the dynamic power division mechanism 22. At the time of forward movement, only the second motor generator 32 outputs driving power, and therefore, the ring gear R22 of the dynamic power division mechanism 22 rotates positively. The cogging torque of the first motor generator 23 acts on the sun gear S22. The sun gear S21 of the overdrive mechanism 21 idles, and therefore, the torque (negative torque) in a direction of stopping the rotation is hardly applied to the carrier C22 linked with the ring gear R21 of the overdrive mechanism 21. Therefore, the ring gear R22 rotates at a speed corresponding to the vehicle speed, the sun gear S22 rotates at a low speed at which the sun gear S22 is nearly in a stop state, and further, the carrier C22 rotates at a lower speed than the ring gear R22. Meanwhile, in the overdrive mechanism 21, the carrier C21 linked with the engine 20 is in a stop state, and the ring gear R21 rotates at the same speed as the carrier C22 of the dynamic power division mechanism 22. Thereby, the sun gear S21 rotates in the negative direction. The rotation of each rotation element of the overdrive mechanism 21 and dynamic power division mechanism 22 is a so-called associated rotation due to the rotation of the driven gear 27 on the countershaft 26 by the second motor generator 32. Here, the vehicle runs backward when the second motor generator 32 rotates in the negative direction and outputs driving power.

The double drive mode is a running mode of engaging the first clutch C1 and the brake B1 and operating both the motor generators 23, 32 as motors (M). FIG. 10 is a collinear diagram showing the state. In the overdrive mechanism 21, the first clutch C1 is engaged, and the whole of the overdrive mechanism 21 is united. In that state, the brake B1 is engaged, and thereby, the rotation of the whole of the overdrive mechanism 21 is stopped. Therefore, the carrier C22 of the dynamic power division mechanism 22 linked with the ring gear R21 is fixed, and in that state, the first motor generator 23 operates as a motor in the negative rotation direction. Accordingly, the torque by the first motor generator 23 is output from the ring gear R22 as the torque in the positive rotation direction. Further, the second motor generator 32 operates as a motor in the positive rotation direction. Accordingly, the torque of the second motor generator 32 is added to the torque to be output from the output gear 25. At the time of backward movement, the torque directions of the motor generators 23, 32 are opposite to those at the time of forward movement.

In the hybrid vehicle shown in FIG. 4, the driving power source is the engine 20 and the motor generators 23, 32, and the second motor generator 32 functions as a motor and outputs torque, in any of the above-described running modes. Therefore, there is a possibility of getting into the single-phase lock state, for example, at the time of movement start or at the time of the acceleration from a low vehicle speed state. The determination or estimation (prediction) of the single-phase lock state can be performed in the same way as that in the above-described embodiment. In the hybrid vehicle also, in the case where it is determined or estimated to become the single-phase lock state, the slip quantity of the lock-up clutch CL is increased, and the relative rotation speed in the fluid coupling 33 is increased. Thereby, the speed of the second motor generator 32 becomes outside the above-described single-phase lock region, or does not fall into the single-phase lock region. The control will be described in an example of movement start.

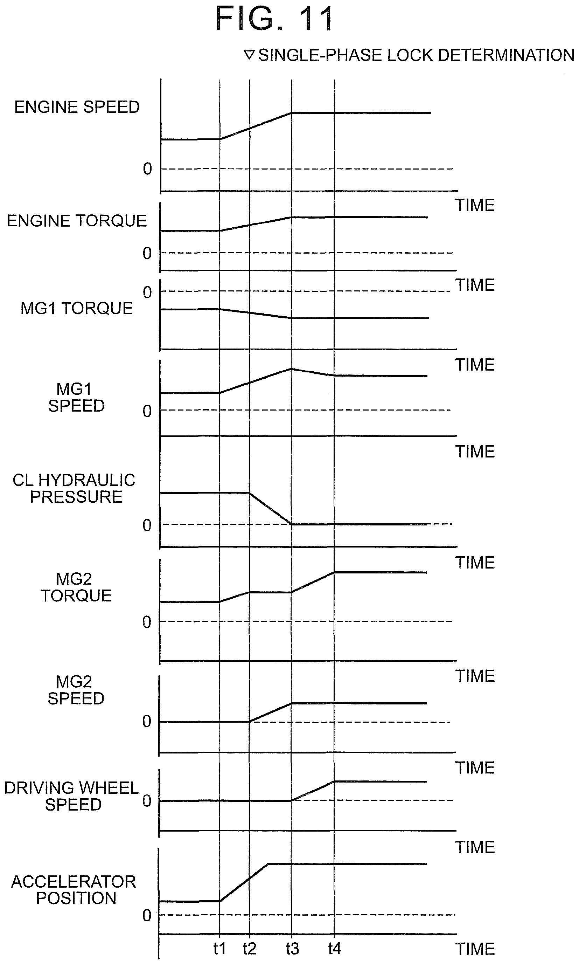

FIG. 11 is a timing chart showing changes in the speed of the second motor generator (MG2) 32, the hydraulic pressure of the lock-up clutch CL when the control apparatus according to the invention performs the control. Also in the control in this case, when it is determined or estimated that the single-phase lock state is likely to occur, the transmission torque capacity of the lock-up clutch CL is decreased, and the speed of the second motor generator 32 is increased. Therefore, the basic content of the control is the same as the above-described content of the control in the EV mode.

In a state in which the vehicle is at a stop (the driving wheel speed is zero), an accelerator pedal (not illustrated) is slightly stepped on, and thereby, the engine speed becomes a speed that is equivalent to or slightly higher than an idling speed. In that case, for keeping the rotation of the output gear 25 stopped, the first motor generator (MG1) 23 rotates in the positive direction, and functions as an electric generator. Further, the second motor generator 32 outputs the positive torque corresponding to creep torque, the lock-up clutch CL is engaged, and the speed of the second motor generator 32 is zero. In this state, when the accelerator pedal is stepped on and the accelerator position is increased (time t1), the engine speed and the engine torque increase. Further, for controlling the engine speed to a speed allowing for a good fuel efficiency, the speed of the first motor generator 23 increases, and the negative torque increases. Furthermore, the output torque of the second motor generator 32 increases. At this time, the vehicle has not moved, and therefore, the second motor generator 32 does not rotate. Therefore, it is determined or estimated that the operating state of the second motor generator 32 becomes the single-phase lock state (time t2).

Since the determination of becoming the single-phase lock state is made, the hydraulic pressure of the lock-up clutch CL is immediately decreased. On this occasion, the hydraulic pressure of the lock-up clutch CL may be decreased in a predetermined gradient. Alternatively, the hydraulic pressure of the lock-up clutch CL may be decreased stepwise, and thereafter, may be decreased in a predetermined gradient. The control is a control for decreasing the transmission torque capacity of the lock-up clutch CL and causing the slip (relative rotation) of the lock-up clutch CL and the fluid coupling 33, and therefore, in the case where a target hydraulic pressure is set, the control is executed by feedforward control, for example. Here, the transmission ratio of torque decreases for the lock-up clutch CL, and increases for the fluid coupling 33. Therefore, the speed of the second motor generator 32 starts to increase. Here, the torque of the second motor generator 32 is maintained to the previous torque, or the increasing gradient is reduced. As described above, the single-phase lock state occurs when the torque or electric current value of the second motor generator 32 is high and the speed is a low speed. However, as described above, the transmission torque capacity of the lock-up clutch CL is decreased, and the speed of the second motor generator 32 is increased. Thereby, the operating state of the second motor generator 32 is avoided from getting into the single-phase lock state. Further, in that case, the torque of the second motor generator 32 is transmitted by both of the lock-up clutch CL and the fluid coupling 33. Therefore, the driving torque by the second motor generator 32 is not lost at all, and the driving torque is ensured. Furthermore, even when the fluid is stirred or sheared in the fluid coupling 33 and heat is generated, the heat is radiated to the exterior and the rise in temperature is inhibited, because the fluid flows in a circulating manner among the interior of the fluid coupling 33, an oil cooler (not illustrated).

When the accelerator position increases even after time t2, the engine speed, the engine torque, and the speed and torque of the second motor generator 32 increase in association with that. Therefore, the driving power of the vehicle increases, the vehicle starts to move (time t3), and the speeds of the driving wheels start to increase. At that time, the accelerator position is maintained to a predetermined accelerator position, and thereby, the engine speed and the engine torque are maintained to values corresponding to the accelerator position. Further, the torque of the first motor generator 23 is maintained to a constant value such that the driving torque at that time is maintained, and further, the speed of the first motor generator 23 slightly decreases. Then, the hydraulic pressure of the lock-up clutch CL becomes nearly zero, and the lock-up clutch CL is disengaged. The torque of the second motor generator 32 is increased to a torque corresponding to the electric power generated by the first motor generator 23, and the speed is maintained to a nearly constant speed. Thus, the driving wheel speed (vehicle speed) reaches a constant value and is maintained (time t4), and then, the torques of the motor generators 23, 32 are maintained to constant values. Here, after the movement start of the vehicle, in the case where there is no possibility that the operating state of the second motor generator 32 gets into the single-phase lock state, the lock-up clutch CL is engaged. Thereby, it is possible to prevent or inhibit the slip and the dynamic power loss associated with the slip on the transmission path that is from the second motor generator 32 to the driving wheels 31.

Here, the invention is not limited to the above-described specific examples, and various modifications are possible. For example, the invention can be configured such that the degree of the likelihood of the single-phase lock or the degree of the single-phase lock is determined or calculated and the slip control is performed depending on the determined or calculated degree. In that case, the degree of the likelihood of the single-phase lock or the degree of the single-phase lock can be evaluated based on the on/off of the off-road switch, the speed of a wheel, the gradient of a climbing road, the accelerator position or the demand torque based on the accelerator position. In the case where the degree of the likelihood of the single-phase lock or the degree of the single-phase lock evaluated in this way is high, that is, in the case where the likelihood of the single-phase lock is higher or the heat load in the single-phase lock is greater, the quantity of the slip control, that is, the relative rotation speed in the fluid coupling is set to a higher speed.

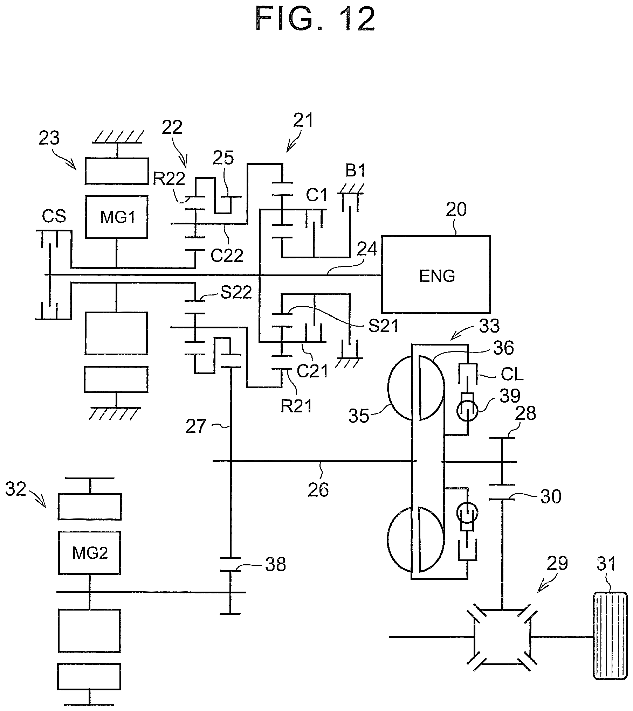

Further, the electrically driven vehicle that is the control object in the invention, in short, only needs to be a vehicle in which the fluid coupling and the engagement mechanism are disposed in parallel on the transmission path between the electric motor to output the driving power for running and the driving wheels. Therefore, for example, as shown in FIG. 12, the above-described fluid coupling 33 and lock-up clutch CL may be disposed between the driven gear 27 and the drive gear 28 on the countershaft 26. Further, in the invention, other than the control to generate the slip (relative rotation) in the fluid coupling by the disengagement of the engagement mechanism, both the engagement mechanism and the fluid coupling may be set to the slip state, and both the slip quantity of the engagement mechanism and the slip quantity of the fluid coupling may be increased in the case where it is determined or estimated that the single-phase lock state occurs. In short, it is only necessary to be a configuration of performing a control to increase the speed of the electric motor that is linked with the fluid coupling and the engagement mechanism.

## Claims

1. A control apparatus for an electrically driven vehicle, the electrically driven vehicle including a driving wheel (7), a driving power source (2) and a driving power transmission path (8), the driving power source (2) including an electric motor (3), the driving power transmission path (8) being configured to transmit driving power generated by the driving power source (2), to the driving wheel (7), the control apparatus comprising:
a dynamic power transmission mechanism (9) that is disposable on the driving power transmission path (8), the dynamic power transmission mechanism (9) including a driving-side member (13), a driven-side member (14), a fluid coupling (11) and an engagement mechanism (12), the driving-side member (13) being linkable with the electric motor (3), the driven-side member (14) being linkable with the driving wheel (7), the fluid coupling (11) being configured such that torque is transmitted through fluid while the driving-side member (13) and the driven-side member (14) relatively rotate, the engagement mechanism (12) being configured to link the driving-side member (13) and the driven-side member (14);
the control apparatus being **characterized by** further comprising:
an electronic control unit (15) configured to determine whether the operating state of the electric motor (3) becomes an operating state in which a value of a heat load generated in the electric motor (3) during a predetermined period is a predetermined value or greater, the electronic control unit (15) being configured to control the dynamic power transmission mechanism (9), in a case of determining that the operating state of the electric motor (3) becomes the operating state in which the value of the heat load is the predetermined value or greater, so as to execute a slip control such that based on the heat load, the greater the heat load is, the higher a speed of the electric motor (3) is than the speed of the electric motor (3) at a time point, when the operating state of the electric motor (3) becomes the operating state in which the value of the heat load is the predetermined value or greater, and that the greater the heat load is, the more speed of a relative rotation in the fluid coupling (11) increases.

2. The control apparatus according to claim 1, wherein
the engagement mechanism (12) is a clutch configured to continuously change transmission torque capacity, and
the electronic control unit (15) is configured to decrease the transmission torque capacity of the clutch as the slip control.

3. The control apparatus according to claim 1 or 2, wherein
the operating state in which the value of the heat load is the predetermined value or greater is an operating state in which a torque or electric current value of the electric motor (3) is in a predetermined range and in which the speed of the electric motor (3) is a previously decided speed or lower, and
the electronic control unit (15) is configured to determine that the value of the heat load becomes the predetermined value or greater, based on a torque or electric current value and a speed that are demanded of the electric motor (3).

4. The control apparatus according to claim 1, wherein
the engagement mechanism (12) is a clutch configured to change transmission torque capacity.

## Patentansprüche

1. Steuerungsvorrichtung für ein elektrisch angetriebenes Fahrzeug, wobei das elektrisch angetriebene Fahrzeug ein Antriebsrad (7), eine Antriebsenergiequelle (2) und einen Antriebsenergieübertragungspfad (8) umfasst, wobei die Antriebsenergiequelle (2) einen elektrischen Motor (3) aufweist, wobei der Antriebsenergieübertragungspfad (8) konfiguriert ist, von der Antriebsenergiequelle (2) erzeugte Antriebsenergie an das Antriebsrad (7) zu übertragen, wobei die Steuerungsvorrichtung umfasst:
einen dynamischen Energieübertragungsmechanismus (9), der in dem Antriebsenergieübertragungspfad (8) verfügbar ist, wobei der dynamische Energieübertragungsmechanismus (9) ein antriebsseitiges Element (13), ein abtriebsseitiges Element (14), eine Fluidkupplung (11) und einen Eingriffsmechanismus (12) aufweist, wobei das antriebsseitige Element (13) mit dem Elektromotor (3) verbindbar ist, wobei das abtriebsseitige Element (14) mit dem Antriebsrad (7) verbindbar ist, wobei die Fluidkupplung (11) so konfiguriert ist, dass das Drehmoment durch ein Fluid übertragen wird, während sich das antriebsseitige Element (13) und das abtriebsseitige Element (14) relativ zueinander drehen, wobei der Eingriffsmechanismus (12) konfiguriert ist, dass antriebsseitige Element (13) und das abtriebsseitige Element (14) zu verbinden,
wobei die Steuerungsvorrichtung **dadurch gekennzeichnet ist, dass** sie ferner umfasst:
eine elektronische Steuerungseinheit (15), die konfiguriert ist, zu bestimmen, ob der Betriebszustand des Elektromotors (3) ein Betriebszustand wird, in dem ein Wert einer Wärmelast, die in dem Elektromotor (3) während einer vorbestimmten Zeitdauer erzeugt wird, ein vorbestimmter Wert oder größer ist, wobei die elektronische Steuerungseinheit (15) konfiguriert ist, den dynamischen Energieübertragungsmechanismus (9) zu steuern, in einem Fall, in dem bestimmt wird, dass der Betriebszustand des Elektromotors (3) der Betriebszustand wird, in dem der Wert der Wärmelast der vorbestimmte Wert oder größer ist, eine Schlupfsteuerung so auszuführen, dass, basierend auf der Wärmelast, je größer die Wärmelast ist, desto höher die Drehzahl des Elektromotors (3) ist als die Drehzahl des Elektromotors (3) zu einem Zeitpunkt, wenn der Betriebszustand des Elektromotors (3) der Betriebszustand wird, in dem der Wert der Wärmelast der vorbestimmte Wert oder größer ist, und dass, je größer die Wärmelast ist, desto mehr nimmt die Geschwindigkeit einer Relativdrehung in der Fluidkupplung (11) zu.

2. Steuerungsvorrichtung nach Anspruch 1, wobei
der Eingriffsmechanismus (12) eine Kupplung ist, die konfiguriert ist, die Übertragungsdrehmomentkapazität kontinuierlich zu ändern, und
die elektronische Steuerungseinheit (15) konfiguriert ist, die Übertragungsdrehmomentkapazität der Kupplung als die Schlupfsteuerung zu verringern.

3. Steuerungsvorrichtung nach Anspruch 1 oder 2, wobei
der Betriebszustand, in dem der Wert der Wärmelast der vorbestimmte Wert oder größer ist, ein Betriebszustand ist, in dem ein Drehmoment oder elektrischer Energiewert des Elektromotors (3) in einem vorbestimmten Bereich liegt und in dem die Drehzahl des Elektromotors (3) eine zuvor festgelegte Geschwindigkeit oder niedriger ist, und
die elektronische Steuerungseinheit (15) konfiguriert ist, zu bestimmen, dass der Wert der Wärmelast der vorbestimmte Wert oder größer wird, basierend auf einem Drehmoment oder elektrischen Stromwert und einer Geschwindigkeit, die von dem Elektromotor (3) verlangt werden.

4. Steuerungsvorrichtung nach Anspruch 1, wobei
der Eingriffsmechanismus (12) eine Kupplung ist, die konfiguriert ist, die Übertragungsdrehmomentkapazität zu ändern.

## Revendications

1. Appareil de commande pour un véhicule à propulsion électrique, le véhicule à propulsion électrique comprenant une roue motrice (7), une source d'énergie d'entraînement (2) et un passage de transmission d'énergie d'entraînement (8), la source d'énergie d'entraînement (2) comprenant un moteur électrique (3), le passage de transmission d'énergie d'entraînement (8) étant configuré pour transmettre de l'énergie d'entraînement générée par la source d'énergie d'entraînement (2) à la roue motrice (7), l'appareil de commande comportant :
un mécanisme de transmission d'énergie dynamique (9) qui peut être disposé sur le passage de transmission d'énergie d'entraînement (8), le mécanisme de transmission d'énergie dynamique (9) comprenant un élément du côté entraînement (13), un élément du côté entraîné (14), un accouplement hydraulique (11) et un mécanisme d'engagement (12), l'élément du côté entraînement (13) pouvant être relié au moteur électrique (3), l'élément du côté entraîné (14) pouvant être relié à la roue motrice (7), l'accouplement hydraulique (11) étant configuré de telle sorte que du couple est transmis par du fluide alors que l'élément du côté entraînement (13) et l'élément du côté entraîné (14) tournent de manière relative, le mécanisme d'engagement (12) étant configuré pour lier l'élément du côté entraînement (13) et l'élément du côté entraîné (14) ;
l'appareil de commande étant **caractérisé en ce qu'**il comporte en outre :
une unité de commande électronique (15) configurée pour déterminer si l'état de fonctionnement du moteur électrique (3) devient un état de fonctionnement dans lequel une valeur d'une charge thermique générée dans le moteur électrique (3) au cours d'une période prédéterminée est une valeur prédéterminée ou plus grande, l'unité de commande électronique (15) étant configurée pour commander le mécanisme de transmission d'énergie dynamique (9), dans un cas de détermination que l'état de fonctionnement du moteur électrique (3) devient l'état de fonctionnement dans lequel la valeur de la charge thermique est la valeur prédéterminée ou plus grande, de façon à exécuter une commande de glissement de telle sorte que, sur la base de la charge thermique, plus la charge thermique est grande, plus une vitesse du moteur électrique (3) est élevée par rapport à la vitesse du moteur électrique (3) à un instant, quand l'état de fonctionnement du moteur électrique (3) devient l'état de fonctionnement dans lequel la valeur de la charge thermique est la valeur prédéterminée ou plus grande, et que plus la charge thermique est grande, plus la vitesse d'une rotation relative de l'accouplement hydraulique (11) augmente.

2. Appareil de commande selon la revendication 1, dans lequel
le mécanisme d'engagement (12) est un embrayage configuré pour changer de manière continue une capacité de couple de transmission, et
l'unité de commande électronique (15) est configurée pour diminuer la capacité de couple de transmission de l'embrayage comme commande de glissement.

3. Appareil de commande selon la revendication 1 ou 2, dans lequel
l'état de fonctionnement dans lequel la valeur de la charge thermique est la valeur prédéterminée ou plus grande est un état de fonctionnement dans lequel un couple ou une valeur de courant électrique du moteur électrique (3) est dans une plage prédéterminée et dans lequel la vitesse du moteur électrique (3) est une vitesse précédemment décidée ou inférieure, et
l'unité de commande électronique (15) est configurée pour déterminer que la valeur de la charge thermique devient la valeur prédéterminée ou plus grande, sur la base d'un couple ou d'une valeur de courant électrique et d'une vitesse qui sont exigés du moteur électrique (3).

4. Appareil de commande selon la revendication 1, dans lequel
le mécanisme d'engagement (12) est un embrayage configuré pour changer une capacité de couple de transmission.
